Europäisches Patentamt

European Patent Office

Office européen des brevets

(19)

(11) Publication number: **0 025 617**

**A1**

(12) EUROPEAN PATENT APPLICATION

(21) Application number: **80200802.9**

(51) Int. Cl.³: **A 23 F 5/10**

(22) Date of filing: **27.08.80**

(30) Priority: **07.09.79 US 73355**

(43) Date of publication of application: **25.03.81**
**Bulletin 81/12**

(84) Designated Contracting States: **BE DE FR IT NL**

(71) Applicant: **THE PROCTER & GAMBLE COMPANY,**
**301 East Sixth Street, Cincinnati Ohio 45202 (US)**

(72) Inventor: **Cooper, Carolyn Ann, 82 Eastwood Avenue,**
**Buffalo, NY 14208 (US)**
Inventor: **Pultinas, Edmund Paul Jr., 6016 Monticello**
**Avenue, Cincinnati, OH 45224 (US)**

(74) Representative: **Brooks, Maxim Courtney et al, Procter &**
**Gamble (NTC) Limited Whitley Road Longbenton,**
**Newcastle-upon-Tyne NE12 9TS (GB)**

(54) Aromatic coffee product and process of making thereof.

(57) A process for producing a roast and ground or flaked coffee product having an enhanced, pleasant aroma in the can, is disclosed. This process comprises quenching freshly roasted coffee beans to a moisture content of from about 1% to about 4%, preferably from 1-½% to about 3.5%; grinding and optionally milling the ground roasted beans; and adding water to the comminuted roast beans prior to packing so that the final moisture content of the coffee is from about 3% to about 6%. The coffee product produced by this process has enhanced initial aroma intensity compared to normally processed coffee having 3% to 6% moisture as initially quenched in the whole roast process. The aroma which is readily apparent when the package is opened is of a very intense pleasant coffee character.

AROMATIC COFFEE PRODUCT AND PROCESS
OF MAKING THEREOF

**This** invention relates to the field of coffee
processing and coffee products.

A major and recurring theme in the coffee industry
is the problem of aroma and flavour quality of finished
coffee products, such as roast and ground coffee,
flaked coffee, instant coffee, decaffeinated coffee,
and the like. The important constituents which make
up the aroma and flavour character of the coffee product
are usually extremely volatile compounds. Because of
their volatility, substantial amounts of such constituents
are lost during coffee processing. For example, the
grinding of roasted coffee produces a gas referred to as
grinder gas, which is highly aromatic but which is lost
in conventional roast and ground coffee processing.
The milling process used to make coffee flakes provides
a coffee of increased extractability but usually results
in a flaked coffee product having a low initial aroma
intensity or low can aroma.

A number of different approaches to improving the
aroma qualities of these various types of coffee products
are known in the art. The first approach has been to use
the gases produced or released during the roasting of coffee as an aroma source. For example, the patent to McCrosson, U.S. 2,087,602, issued July 20, 1937, discloses a process for enriching the ultimate aroma and flavor of a finished coffee product by drenching and thus impregnating roast and ground coffee with the aroma-laden gases liberated during green bean roasting in a sealed coffee roaster. Similarly, the patent to Wendt et al., U.S. 2,156,212, issued April 25, 1939, discloses a process wherein vapors from the roaster gases are selected and purified and then contacted with various substrates including liquid coffee concentrate, coffee powder and roasted coffee so that the coffee product absorbs the desirable aromatic principles.

A second approach for improving the overall aroma quality of the coffee product has been to blend a major portion of aroma-poor coffees with a lesser portion of more aroma-rich coffees. For example, in the patent to Joffe, U.S. 3,615,667, issued October 26, 1971, flaked low and intermediate grade coffees which are poor in aroma quality are combined with a lesser portion of ground high grade coffees having good aroma qualities in order to compensate for the lower flavor and aroma intensity and quality of the lower grade flaked coffees. However, such mixtures essentially trade off increased initial aroma for increased extractability.

A third approach has been the cold aromatization of various coffee products, especially instant coffee. For example, Patel et al., U.S. 3,823,241, issued July 9, 1974, discloses a process for improving the cryogenic aromatization of instant coffee by transferring the aroma of roast and ground coffee onto a coffee aroma absorbent material such as instant coffee having carrier oils such as coffee oil sprayed thereon. However, the use of a carrier oil can decrease the release of aroma constituents absorbed by the substrate and can also create an unsightly and unflavorful residue in the beverage.

The patent to Mahlmann, U.S. 3,873,746, issued March 25, 1975, discloses a fourth approach for aromatizing coffee by contacting chilled roast and ground coffee with the evaporative vapors of a synthetic coffee aroma composition. However, as admitted by Mahlmann, a synthetic coffee aroma approaches, but is not the same as, natural coffee aroma.

A fifth approach is the cold processing of a portion or all of the coffee, e.g. quenching the coffee beans immediately after roasting with liquid nitrogen, and grinding at temperatures below 40°F. However, such operations require special equipment and are more expensive than conventional coffee processing. This extra aroma is noticed in the coffee brew as well as in the ground coffee.

The success of any method of improving the aroma character of a coffee product will first depend on how well the aroma of the ultimate product is perceived by the consumer.

An important consideration in the success of a method of enhancing the aroma of roast and ground or flaked coffee is the efficiency and effectiveness of the method. Thus, the ability to enhance the aroma, and actually produce a coffee with an improved aroma without having to utilize grinder gas or synthetic coffee aroma materials or cryogenic processing is very important.

It is therefore an object of the present invention to produce a coffee product having an increased and a desirable aroma quality over conventionally produced coffees without the addition of aroma from other sources and without the addition of oil or other carriers.

It is a further object of the present invention to provide a process for producing such an aromatized product which is easily facilitated in terms of equipment and processing.

These and other objects of the present invention will become apparent in the description that follows.

## DISCLOSURE OF THE INVENTION

A variety of roast and ground coffee blends, including those which may be classified for convenience and simplification as low grade, intermediate grade, and high grade coffees can be used to prepare the coffees herein. Suitable examples of low grade coffees include the natural Robustas such as the Ivory Coast Robustas and Angola Robustas; and the Natural Arabicas such as the natural Perus and natural Ecuadors. Suitable intermediate grade coffees include the natural Arabicas from Brazil such as Santos, Paranas and Minas; and natural Arabicas such as Ethiopians. Examples of high grade coffees include the washed Arabicas such as Mexicans, Costa Ricans, Colombians, Kenyas and New Guineas. Other examples and blends thereof are known in the art and are illustrated in, for example, U.S. Patent 3,615,667 (issued October 26, 1971 to Joffe), the disclosure of which is incorporated herein by reference.

Decaffeinated coffees can also be used. Typically, decaffeination of coffee is accomplished by solvent extraction prior to the roasting of green coffee beans. Such decaffeination methods are well known in the art and illustrated in, for example, U.S. 3,671,263 (issued June 20, 1972 to Patel et al); U.S. 3,700,464 (issued October 24, 1972 to Patel et al); U.S. 3,700,465 (issued October 24, 1972 to Lawrence et al); and U.S. 3,671,262 (issued June 20, 1972 to Wolfson et al). See also Sivetz, Coffee Processing Technology, Avi Publishing Co., Westport, Connecticut, 1963, pp. 207 to 278.

As is known in the art, the removal of caffeine from coffee products frequently is accomplished at the expense of the removal of certain other desirable components which contribute to the flavor. The tendency of decaffeinated products to be either weak or deficient in flavor as well as aroma is known. The added aroma advantages achieved by the process herein permits a realization of levels of aroma which might otherwise not be attainable in the case of conventional decaffeinated roast and ground coffees.

The improved coffee product herein is produced by a process which comprises:

(a) quenching freshly roasted coffee beans to a moisture content of from about 1% to about 4%;

(b) comminuting the roasted beans; and

(c) adding water to the comminuted roasted beans so that the final moisture content is from about 3% to about 9%.

As used herein, the term "comminuting" includes grinding and flaking. It essentially means that the coffee beans are in some ways transformed into smaller particles.

The green coffee beans are roasted either separately or as a blend in a type of roaster conventionally employed in the coffee industry. The roasting may be what is termed a "fast roast", i.e. in a manner using a roaster which allows for the roasting of the beans within about 5 minutes, or a "normal roast" which generally takes up to about 15 to 20 minutes. The beans are usually roasted to a terminal roast temperature of between 400° and 600°F. The beans are characterized by a roast color of between about 65 and 85 photovolts.

The characteristic coffee flavor is developed in the coffee beans during roasting. The heat drives out the moisture of the green beans and also raises the temperature of the beans to the point where the exothermic reactions occur. When the beans have attained the desired color and temperature, the roasting process is stopped abruptly by rapid cooling of the beans below the pyrolysis temperature. This rapid cooling process is known as "quenching".

The quenching of hot roasted beans with water results in a stripping or loss of coffee aroma volatiles from the beans. During quenching, hot water and steam enter into the bean and distillation of steam and volatiles occurs. The use of lesser amounts of water during quenching with sufficient cooling to rapidly bring the roasted beans to about 75-95°F is an effective means of trapping volatiles in the bean. As disclosed later, the trapped volatiles are released into the headspace of the coffee package by the addition of water, resulting in a higher aromatic level than is achieved by conventional processing.

The hot roasted beans are also quenched using non-aqueous means such as air or cryogenic materials such as dry ice or liquid nitrogen. The normal whole roast temperature after quenching is usually from 75° to 95°F.

In the process herein the beans are quenched after roasting in a manner so that the final moisture content of the beans is between about 1% and about 4%, preferably from about 1-1/2% to about 3.5%.

Conventional processing using a water quench to make a coffee product having an initial moisture content after quenching of 4% to 6% normally uses about 0.7 to 1.9 gallon of water for 100 pounds of green beans roasted. In the process herein from 0.3 to 1.00 gallon of water for 100 pounds of beans is used. This produces a coffee having a final moisture content of from about 1% to about 4%.

Other non-aqueous methods of quenching which do not increase the moisture content of the roasted bean above 4.0% can also be used. Such a process would be contacting the roasted coffee beans with a cryogenic material such as liquid nitrogen or solid carbon dioxide or passing cool air over the hot beans.

The roasted beans are then ground using any of the conventional grinding apparatuses. Typical grinding equipment and method for grinding roasted coffee beans are described, for example, in Sivetz, ibid, Vol. 1, pp. 239-250.

The whole roasted coffee beans are usually ground at temperatures of from 40°F to 95°F. Lower temperature grinding retains more of the aromatic substances within the coffee. Thus, one of the "cold grinding" methods may also be used herein. These methods involve cooling the whole roast coffee to a temperature of -5°F to 5°F before grinding and/or mixing the whole roast coffee with solid carbon dioxide just prior to grinding.

Depending upon the specific particle size distribution desired in the final product of the present invention, coffee fractions can be ground to the particle size distribution of "regular", "drip", or "fine" grinds. The standards of these grinds is suggested in the 1948 Simplified Practice Recommendation by the U.S. Department of Commerce (see Coffee Brewing Workshop Manual), p. 33, published by the coffee brewing center of the Pan American Bureau, are as follows:

| Regular Grind: Sieve (Tyler) | Weight (Percent) |
|---|---|
| On 14 Mesh | 33% |
| On 28 Mesh | 55% |
| Through 38 Mesh | 12% |

| Drip Grind: Sieve (Tyler) | Weight (Percent) |
|---|---|
| On 28 Mesh | 73% |
| Through 28 Mesh | 27% |

| Fine Grind: Sieve (Tyler) | Weight (Percent) |
|---|---|
| Through 14 Mesh | 100% |
| On 28 Mesh | 70% |
| Through 28 Mesh | 30% |

To prepare a flaked coffee, the ground coffee is roll milled. Any of a variety of roll mills can be used which are capable of subjecting roast and ground coffee to mechanical compressing action so that the particles of coffee passing between the rolls are crushed and flattened such that the coffee cellular structure is disrupted and the resulting appearance is that of a flake. Normally, smooth or highly polished rolls will be employed as they permit ready cleaning; other rolls can, however, be employed if the desired flaking effect can be obtained.

The flaking operation results in the roast and ground coffee particles being crushed and dropped from the rolls in the form of flakes. The roll milling can be accomplished in any of the well-known and commercially available roll mills such as those sold under the trademarks of Lehmann, Thropp, Farrell and Lahoff.

For a detailed discussion of roll milling see U.S. Patent 3,615,667, issued to Joffe, October 26, 1971, and U.S. Patent 3,660,160 issued to McSwiggin et al, May 2, 1972, the discussions of which are incorporated herein by reference.

A special condition of roll spacing in the roll milling operation is "zero static gap" which is used to indicate that the two rolls are in actual contact with each other along the line of the nip when the roll mills are at rest. Suitable gap settings for roll milling range from 0 up to about 1 mil, 0.001 inch. Preferably, a zero static gap spacing of the roll mills is employed herein.

After the coffee beans have been ground and/or milled the product is sized. A wide variety of suitable sizing methods and apparatus is known in the art (see, for example, "Perry's Handbook for Chemical Engineers", McGraw-Hill, pp. 21-46, 21-52, incorporated herein by reference). For example, the low moisture flaked coffee can be effectively screen sized by dropping the flaked coffee or the ground coffee particles from a hopper, chute or other feeding device into a mechanically vibrating screen, or into a multiple sieve shaker such as those marketed by Newark Wire Cloth Company and the W. S. Tyler Company. Typically, the sizing operation separates the flaked coffee or ground coffee of various particle size into the desired size fractions in less than one minute.

Packaging requirements for the coffee of this invention are the same as those that are required for conventional roast and ground coffee to prevent staling. Suitable packages for these coffees meet

0025617

-10-

the following requirements: (1) low moisture-vapor transmission rate; (2) excellent oxygen barrier characteristics; (3) impermeability to grease; (4) impermeability to aromas and odors; (5) slight permeability to carbon dioxide; and (6) durability.

The moisture and oxygen barrier properties in aroma protection of the package are the most important.

To initiate the release of the aroma, water is added to the low moisture (1% to 4%) roast and ground or flaked coffee to bring the total moisture content of the coffee to a level of about 3% to about 6%. The coffee is then packaged and sealed, preferably under vacuum as soon as possible to retain the aroma which is liberated via the water addition.

A higher final moisture content, i.e. up to 9% is acceptable herein. However, when the moisture level of the coffee product is above about 6%, the coffee tends to stale faster. For this reason, final moisture levels of 3% to 6% are highly preferred herein.

The moisture can be added in the form of ice, water (liquid) or steam. In a highly preferred mode, the moisture is added to the coffee immediately before the package is sealed. This type of addition can be accomplished by injecting water into the coffee already in the can via a syringe or nozzle system, adding water to the package before filling the package with coffee, mixing ice with the coffee during the filling of the package, adding encapsulated water to the package such that the water vapor slowly equilibrates with the coffee within the package, spraying water or steam on the coffee, or adding a packet of water which will burst upon sealing the package.

Another method is to add a film of microporous plastic which has a high amount of water contained therein directly into the can or print such a film onto the package. This method avoids direct contact of the coffee with the liquid water and avoids any problems of lumping or aggregation caused by high water content in one area. The moisture is more efficiently transferred to the coffee from the gas phase.

An additional method is to blend a minor amount, preferably from 10% to 30% of a high moisture coffee product (5% to 9%) with from 70% to 90% low moisture 1% to 4%) coffee product formed after quenching. The blends can be all of one grind or mixtures of roast and ground and flaked coffee.

The high moisture coffee is preferably blended with the low moisture coffee before milling so that the average moisture content of the flakes will be from about 3% to about 6%. High moisture flakes, those having from about 6% to 8% water, tend to exude water during the milling step. Co-milling of the high and low moisture portions improves the milling efficiency.

After the water is added back, the package is sealed. After a short time, equilibration of the water and the coffee is reached so that the final moisture content of the entire package of coffee is from 3% to about 6%. Upon opening the packaged coffee a noticeable increase in aroma is detected.

Depending upon the amount of water added, and upon the starting moisture content of the coffee, an increase in gas chromatographic counts of about 15,000 counts can be obtained. This is a measure of the aroma volatiles present.

Measurement of Aroma Intensity by
Gas Chromatography

### G.C. Count Measurement

The chromatograph comprises a 36 inch chromosorb WAW (acid washed) 60/80 mesh column of 1/4 inch diameter and is housed in an oven section for isothermal temperature control. The column is packed with a uniform-sized solid called the solid support but is not coated with a non-volatile liquid (called the substrate) because the gas is not to be separated into individual compounds as is commonly done in this type of analysis. A hydrogen flame detector is used at the outlet port. An electrometer receives the output signal from the flame detector and amplifies it into a working input signal for an integration. The integrator both sends a display signal to a recorder to print out the response curve and electronically integrates the area under the curve.

The gas sample is injected into a heated injection port, and is immediately swept into the packed column by a carrier gas flow. The non-separated gas mixture is swept as a compact band through the column and into the detector. The detector then ionizes the sample and generates an electrical signal proportional to the concentration of the materials in the carrier gas. The ionized gases and carrier gas are then vented from the unit.

A Hewlett Packard gas chromatograph (Model 700), electrometer (Model 5771A), integrator (Model 3370A), and recorder (Model 7127D), range 0-5 mv. and temperature controller (Model 220) were used. Nitrogen pressure in the column is approximately 16 psig. Air pressure of 24 psig is used to flush out the detector. An oven temperature of 100°C is used and maintained to

-13-

keep the volatiles vaporized. The hydrogen is supplied from a gas cylinder regulated at 30 lbs. psig.

Each peak is measured in counts, the counts being first measured by the flame detector and then both integrated and recorded. The number of counts for a particular component is directly proportional to the number of milligrams of that component in the vapor sample.

The recorder was synchronized with the integrator as follows:

## 1. Calibration

A standard methane gas is used to precisely set the flame ionization response. Prior to analyzing the samples, a 1 cc. sample of gas is obtained from a gas cylinder (0.5% by weight of $CH_4$). The pressure of the gas as it is obtained is 4 psi. The gas sample is syringed into the inlet port of the gas chromatograph. The attenuation of the recorder is set at 8 while the range is 10. The total counts when the procedure is repeated three times average between 145,000 to 150,000 total counts. If the average is not within the specified range, the air flow rate is adjusted.

## 2. Sample Analysis

The sample must be vacuum packed for at least 3 days at $75° \pm 5°F$ before sampling. The vacuum-sealed canister of coffee is punctured to remove the vacuum, then resealed and allowed to equilibrate at least one hour at $75° \pm 5°F$ to allow vapor phase equilibration.

After equilibration, a 1 cc. sample of the aromatic atomosphere of the canister headspace/voidspace is taken again using the same type of syringe as used for the standard methane sample. The gas sample is then injected into the inlet port of the gas chromatograph.

The aroma liberated from the coffee herein is an especially acceptable aroma which is more intense than that of normally processed roast and ground coffee.

BEST MODES

EXAMPLE 1

100 pounds of a blend of low, intermediate and high grown beans are roasted in a Thermalo Roaster for about 3 minutes. One gallon of water is used to quench the beans at the end of the roasting period. The whole roast color is about 77 photovolts, and the final moisture content was 1.9%.

The whole roasted coffee beans are ground to the following particle size:

| Size | Percent |
| --- | --- |
| Through 12 | 23 |
| Through 16 | 47 |
| Through 20 | 17 |
| Through 30 | 8 |
| On pan | 5 |

The ground coffee is milled into flakes at a feed rate of 90 pounds/minute across a 12-inch roll nip on a roll mill operating at 300 rpm and 600 psig pressure. The flakes are sized using a Sweco® No. 7 screen.

The product is placed into one pound cans. Immediately before sealing one-third of the cans are injected with 8 ml. of water at 150°F via a syringe. One-third of the cans are sealed without any water addition. One-third of the cans were sprayed with water to bring the moisture of the coffee up to a 4% moisture level.

The coffee was stored for about 72 hours and then the GC aroma intensity of the products was measured.

- 15 -

The product without any moisture add back has a GC count of 23,600. The product to which 8 ml. of water is added has a GC count of 35,200; the product with sprayed water (4% moisture) has a GC count of 31,600.

### EXAMPLE 2

The same green coffee blend was used to prepare all the samples listed in Table I. The green coffee beans were roasted under normal conditions and quenched with water (about 1 gallon/100 pounds of beans) to produce coffee beans having an initial moisture content of 2%. The coffee was then ground and roll milled.

A 4% moisture content flaked coffee was prepared from the same green coffee blend. The grinding and roll milling parameters were adjusted so that the same amount of brew solids would be yielded by equal weights of the 2% moisture flaked coffee and 4% moisture flaked coffee.

The 2% moisture flaked coffee was packed into one-pound cans (one pound portions per can). Immediately before sealing the coffee, water was added using a syringe to one portion of the coffee so that the final moisture content of the coffee would be 4.2%. To a second portion of the cans, water was sprayed onto the coffee in the can to adjust the final moisture content of the coffee to 4.2%. All of the products were then vacuum sealed.

Table I summarizes the GC counts obtained on these samples as described above.

## TABLE I

| Product | GC Counts |
|---|---|
| 2% moisture flaked coffee | 21,100 |
| 2% moisture flaked coffee with water added (4.2% final moisture) | 30,900 |
| 2% moisture flaked coffee with water sprayed on (4.2% moisture) | 27,900 |
| Flaked coffee with an average moisture content of about 4% | 21,800 |

The addition of the water raises the GC counts or the aroma intensity by about one-third. The aroma intensity of flaked coffee which has been quenched to an average moisture content of about 4% is one-third less than that of the flaked coffee to which the water has been added back to a low moisture coffee.

## EXAMPLE 3

When the same green blend as used on Example 2 is roasted using a fast roasting technique (all of the remaining conditions are the same as Example 1), the following results are obtained:

## TABLE II

| Product | GC Counts |
|---|---|
| 2% moisture flaked coffee | 23,600 |
| 2% moisture flaked coffee with water added (4.2% moisture) | 35,200 |
| 2% moisture flaked coffee with water sprayed on (4.2% final moisture content) | 31,000 |

## EXAMPLE 4

100 pounds of a green coffee blend was charged into a Thermalo Roaster for about 3 minutes. The beans were then quenched using 3 gallons of water.

- 17 -

The moisture content of this whole roast is 6.7%.

The whole roasted coffees are ground at a 7 (coarse roll)/7 (fine roll) setting.

A second blend of flaked coffee was roasted in a Thermalo roaster for about 3 minutes and quenched to a final moisture content of 2%. This low moisture whole roasted coffee was ground at a 7-1/2 (coarse roll)/12 (fine roll) setting.

The low moisture and high moisture coffees were then mixed in a proportion of 70% of the low moisture and 30% of the high moisture coffee in a mixer for about 15 seconds. This product was then milled using a zero gap setting and sized. The product is then immediately packed in one-pound cans and vacuum sealed.

The resultant in-can aroma intensity of this product was 32,200. The low moisture coffee (2%) product without moisture add-back was packed and the headspace aroma measured was 23,600.

EXAMPLE 5

Eighty-five pounds of 55 blend green coffee beans were roasted in a Thermalo roaster for about 3.9 minutes and quenched with 0.7 gallon of water. The color of the whole roast was 79 photovolts, and the moisture content was 2.2%. The coffee was ground in a Gump 66 grinder and vacuum sealed. The aroma intensity of the ground coffee packed in one-pound cans was 42,600 GC counts. Five ml. of water was added to a one-pound can filled with the same coffee, after which the can was vacuum sealed. The aroma intensity was 48,500 GC counts.

CLAIMS

1.   A process of making an aromatic coffee product characterized by:
    (a)  quenching freshly roasted coffee beans to a moisture content of from 1% to 4%;
    (b)  comminuting the roasted beans; and
    (c)  adding moisture to the comminuted roasted beans so that the final moisture content is from 3% to 9%.

2.   A process according to Claim 1 characterized in that the final moisture content is from 3% to 6%.

3.   A process according to Claim 1 or 2 characterized in that the freshly roasted coffee beans are quenched with water in a ratio of from 0.3 to 1.0 U.S. gallons, (1.46 to 3.781) of water per 100 pounds (45.4 kg) of beans.

4.   A process according to Claim 1 or 2 characterized in that the roasted coffee beans are quenched via non-aqueous means.

5.   A process according to any of Claims 1 to 4 characterized in that the comminuting step (b) is grinding of the coffee beans followed by a flaking process.

6.   A process according to any of Claims 1 to 5 characterized in that the moisture in step (c) is added as ice to the comminuted roasted beans prior to packing or is added as liquid water or as steam.

7.   A process according to any of Claims 1 to 5 characterized in that the moisture added in step (c) is added by blending high moisture comminuted coffee with the comminuted low moisture roasted beans of step (b).

8. A process according to Claim 7 characterized in that the high moisture ground coffee is added to the comminuted low moisture coffee immediately prior to packaging.

9. A process according to Claim 7 characterized in that high moisture ground coffee is co-milled with the low moisture comminuted coffee.

10. A coffee product prepared by the process of any of Claims 1 to 9.

| Category | Citation of document with indication, where appropriate, of relevant passages | Relevant to claim |
|---|---|---|
| X | FR - A - 2 388 504 (PROCTER & GAMBLE) <br> * Claims 1,6; examples 1,2 * | 1,7-10 |
| P,E | EP - A - 0 010 803 (PROCTER & GAMBLE) <br> * Claims 1,5,8; examples I-III * | 1-3,7-10 |
| | US - A - 2 167 085 (C. PAGE) <br> * Claim 1; page 2, column 1, line 14 - page 3, column 2, line 30 * | 1,6,8,10 |
| | US - A - 1 975 012 (R. McKINNIS) <br> * Claims 1-4; page 1, lines 64-81 * | 1,6,8,10 |
| A | US - A - 4 053 652 (J. MAHLMANN) | |
| A | FR - A - 1 169 214 (C. PLATEL) | |
| A | US - A - 3 122 439 (R. MAC ALLISTER) | |
| A | US - A - 3 547 653 (H. HIXSON) | |

CLASSIFICATION OF THE APPLICATION (Int. Cl.3)

A 23 F 5/10

TECHNICAL FIELDS SEARCHED (Int. Cl.3)

A 23 F 5/10
5/12
5/08
5/04

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-12-1980 | DESMEDT |

EPO Form 1503.1  06.78